# EUROPEAN PATENT APPLICATION

(11) **EP 1 172 242 A1**
(43) Date of publication of application: **16.01.2002**
(21) Application number: 01305640.3
(22) Date of filing: 28.06.2001
(51) Int. Cl.: B60J 5/04, B62D 65/00

(54) **Door module**

(30) Priority: 14.07.2000 GB 0017234
(71) Applicant: Meritor Light Vehicle Systems (UK) Ltd, Birmingham B30 3BW (GB)
(72) Inventor: Spurr, Nigel, Birmingham, West Midlands B28 0RP (GB)
(74) Representative: Jones, John Bryn

(57) **Abstract**

A door module assembly (23) for mounting in a vehicle door (10), the module assembly including a door latch (30) secured, the door latch having an outside handle lever being located on and outer side of the door module assembly and been operably connectable, in use, to an outside door handle of the door, the door module assembly having a closeable access aperture (28) to allow access from the inside of the door module to connect the outside handle lever (34) to the outside door handle (Figure 2).

## Description

The present invention relates to door modules and doors containing such modules. In particular the invention relates to door modules and doors for vehicles.

Some vehicle doors employ what is known as a door module. The door module consists of a carrier on which can be mounted various components such as window regulators, door latches, inside door handles, inside lock/unlock control, wiring harnesses, loud speakers, switches, etc.

During the assembly of the vehicle door, the door module is secured to the door inner panel, a large aperture having being pierced in the door inner panel to accept the door module. Some door modules, when attached to the inner panel, form a seal between the door cavity and the vehicle interior.

When this type of seal arrangement is in employed, it becomes extremely difficult to connect the door latch to the outside door handle and key device which are mounted on the door outer panel.

It is an object of the present invention to provide an improved door module which is easier to assembly.

Thus according to the present invention there is provided a door module assembly for mounting in a vehicle door, the module assembly including a door latch secured thereto, the door latch having an outside handle lever being located on and outer side of the door module assembly and been operably connectable, in use, to an outside door handle of the door, the door module assembly having a closeable access aperture to allow access from the inside of the door module to connect the outside handle lever to the outside door handle, in which, in use, the door module assembly is sealed relative to the access aperture.

According to a further aspect of the present invention there is provided a door module assembly for mounting in a vehicle door, the door module assembly including a door latch secured thereto, the door latch having a key lever being located on an outer side of the door module assembly and being operably connectable, in use, to an outside key barrel, the door module assembly having a closeable access aperture to allow access from the inside of the door module to connect the key lever to the key barrel in which, in use, the door module assembly is sealed relative to the access aperture.

The invention will now be described, by way of example only, with reference to the accompanying drawings in which:-
Figure 1 is an isometric view of a door suitable for accepting a door module of the present invention;
Figure 2 is an isometric partial view of an outside of a door module assembly according to the present invention;
Figure 3 is an isometric partial view of the door module assembly of figure 2 viewed from the inside; and
Figure 4 is an view similar to figure 3 with an access aperture cover in place.

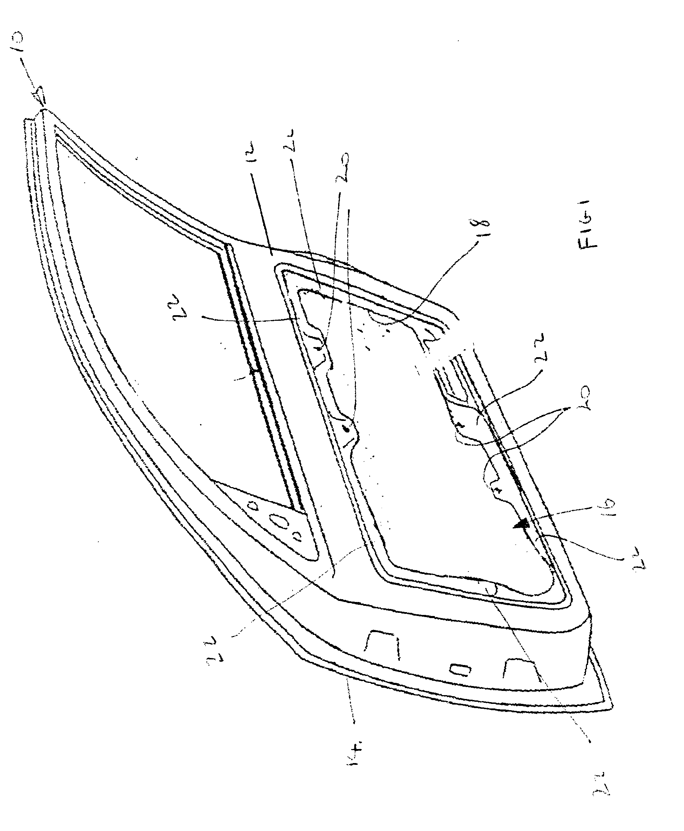

With reference to figure 1 there is shown a vehicle door 10 having a door inner panel 12 in the form a pressed sheet metal component. The door inner panel is connected to a door outer panel 14 (also known as a door outer skin).

The inner panel 12 and outer panel 14 provide for a door cavity 16 (known as the wet side of the door).

The inner panel 12 includes a large mounting aperture 18. Inner panel 12 further includes attachment points 20 used to secure the carrier of a door module assembly (see below) to the inner panel.

Inner panel 12 further includes an aperture border 22 against which the carrier can seal.

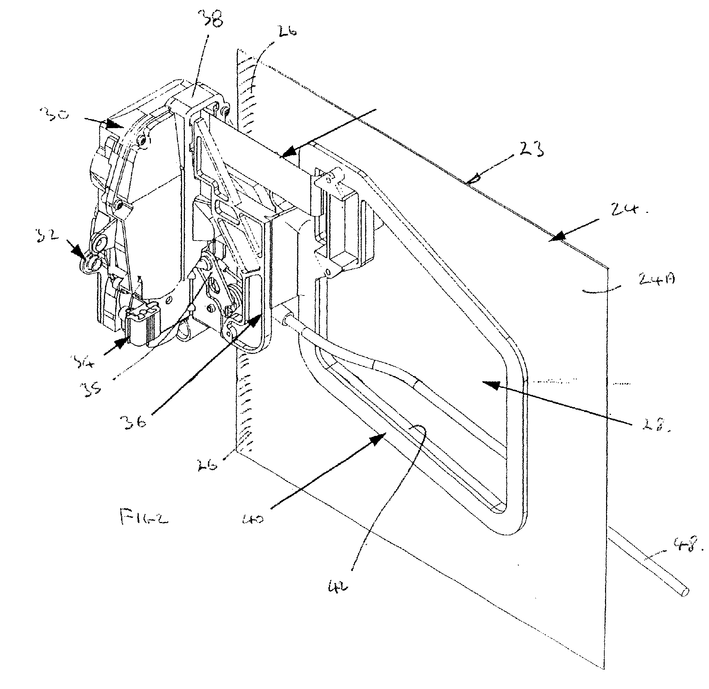

With reference to figures 2 to 4 there is shown a door module assembly 23 having a carrier 24. Typically the door module carrier would be a pressed sheet metal component on which can be mounted eg a window regulator, a door latch, an inside door handle, an inside lock/unlock control (e.g. sill button), a wiring harness, loud speaker, and various switches depending upon the particular requirement. In this case door module carrier 24 has been shown as a simple planar component for ease of reference.

Door module carrier 24 includes a peripheral border region 26 (only part of which is shown cross hatched) for abutment with the aperture border 22 of the door inner panel to provide a seal between the door cavity 16 and the interior of the vehicle, i.e.between the wet and dry sides of the door.

Consideration of figure 2 shows that the door module carrier 24 includes an access aperture 28 the purpose of which will be described further below.

Mounted on the carrier 24 is a door latch 30 having a key lever 32 and an outside handle lever 34. The door latch 30 further includes a latch support portion 36, in this case integrally formed as part of a plastics moulding with a portion of latch housing 38.

The latch support portion 36 includes a flange portion 40 with a lip portion 42 which together are of generally L-shaped cross section.

Lip portion 42 fits within access aperture 28 with flange portion 40 abutting the outer face 24A of module carrier 24 to form a seal.

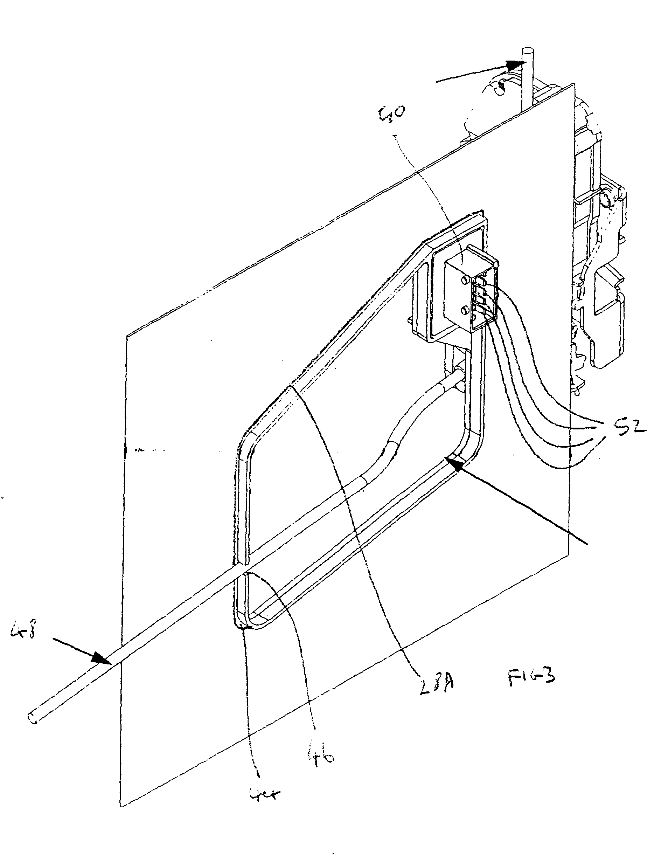

A relatively small gap 44 (see figure 3) is provided between lip portion 42 and the edge 28A of access aperture 28 to provide for a limited amount of relative movement between the carrier 24 and latch 30 to take up manufacturing tolerances.

Lip 42 includes a cut out 46 in which is situated an inside release connection means in the form of a bowden cable 48 which connects the inside door handle to the inside handle lever 35 of the door latch.

The latch support portion 36 further provides an electrical connector housing 50 within which are situated electrical pins 52. It should be noted that the pins are located on the inside (dry side) of the door module assembly and are therefore protected from mositure and dirt within the door cavity 16.

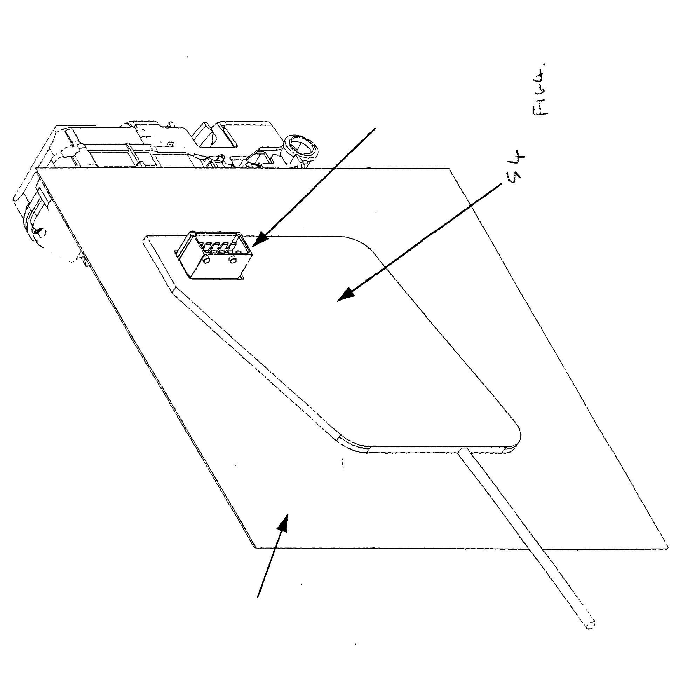

Consideration of figure 4 shows that a cover 54 can be located in a position which closes the access aperture 28. In particular cover 54 seals against lip portion 42 to provide a barrier between the door cavity 16 and the inside of an associated vehicle.

A trim panel (not shown) can be fixed to the inside of the door for aesthetic purposes. It should be noted that the trim panel is located on the inside (dry side) of the door in a dry zone and therefore does not perform any water/moisture barrier function. Hence the trim panel need not possess any water barrier characteristics.

Assembly of a door including a door module according to the present invention is a follows:-

A door is assembled to the stage as shown in figure 1. The door includes an outside door handle (not shown) and also a key barrel (not shown).

A door module is assembled by mounting various components (not shown) onto the module carrier 24 including the door latch 30 and bowden cable 48.

The peripheral border region 26 of the carrier 24 is positioned against the aperture border 22 of the inner panel, preferably with an elastomeric seal positioned there between, thus substantially closing the mounting aperture 18.

Suitable fixtures are used to attach the carrier to the door inner panel by utilisation of the attachment points 20.

At this stage the key lever and outside handle lever remain unconnected to the appropriate key barrel and outside door handle.

By removing the cover 54, an operator can insert his or her hand through the access aperture and reach in to the door cavity to connect the key lever with the key barrel and also to connect the outside handle lever with the outside door handle. Once the connection has being made and operation of the outside handle and key barrel checked, the operator can remove his or her hand and the access aperture can then be closed by replacing the cover 54, noting that the cover is sealed relative to the aperture.

After the carrier has been fixed to the door inner panel, and operation of the outside handle and key barrel checked the trim panel can be assembled onto the inside of the door.

In a preferred embodiment the cover 54 can be moulded integrally with the latch support portion to provide for a live hinge between the cover 54 and the latch support portion.

It should be noted that the electrical pins 52 are located on the inside of the module carrier, i.e. in a region which is less susceptible to the ingress of moisture and dust. The invention therefore provides for an arrangement whereby the integrity of electrical connections can be improved. Further the access aperture can be conveniently used to allow the passage of the inside release connection means from the inside of the module carrier to the outside of the module carrier.

The access aperture need not be sufficiently large to allow access of an operators hand. For example access may only be required for a tool, such as a pair of pliers, to make the appropriate connection.

Depending upon the particular installation then different sealing requirements may be required, for example the seal may be required to be dust resistance, dust proof, moisture resistance or moisture proof. Furthermore higher or lower levers of sealing may be required. Thus the term seal is used herein to describe various degrees of sealing.

## Claims

1. A door module assembly (23) for mounting in a vehicle door (10), the module assembly including a door latch (30) secured thereto, the door latch having an outside handle lever (34) being located on and outer side of the door module assembly and been operably connectable, in use, to an outside door handle of the door, the door module assembly having a closeable access aperture (28) to allow access from the inside of the door module to connect the outside handle lever to the outside door handle, in which, in use, the door module assembly is sealed relative to the access aperture.

2. A door module as defined in Claim 1 the latch further having a key lever (32) being located on an outer side of the door module assembly and being operably connectable, in use, to an outside key barrel, the access aperture further allowing access from the inside of the door module to connect the key lever to the key barrel.

3. A door module assembly (23) for mounting in a vehicle door (10), the door module assembly including a door latch (36) secured thereto, the door latch having a key lever (32) being located on an outer side of the door module assembly and being operably connectable, in use, to an outside key barrel, the door module assembly having a closeable access aperture (28) to allow access from the inside of the door module to connect the key lever to the key barrel in which, in use, the door module assembly is sealed relative to the access aperture.

4. A door module assembly as defined in any preceding claim in which the latch includes a latch support portion (36) to allow the latch to be connected to the door module assembly.

5. A door module assembly as defined in Claim 4 in which the latch support portion is a plastics moulding.

6. A door module assembly as defined in Claim 4 or 5 in which the access aperture is provided in the latch support portion.

7. A door module assembly as defined in Claim 6 in which the latch support portion includes a sealing flange (40) at the periphery of the access aperture to seal between the latch support portion and the door module assembly.

8. A door module assembly as defined in any preceding claim in which the latch is adjustable relative to the door module to allow for manufacturing tolerances.

9. A door module assembly as defined in any preceding claim in which the access aperture is further utilised to allow electric wires to pass between the outside and inside of the door module assembly.

10. A door module assembly as defined in Claim 9 in which electrical wires are provided with electrical connectors (52) proximal the access aperture.

11. A door module assembly as defined in Claim 10 when dependant upon Claim 4 in which the latch support portion is provided with an integral housing (50) for electrical connectors.

12. A door module assembly as defined in any preceding claim in which the access aperture is further utilised to allow inside release connection means to pass between the inside and outside of the door module assembly.

13. A door module assembly as defined in Claim 12 in which the inside release connection means is a bowden cable (48).

14. A door module assembly as defined in any preceding claim in which the access aperture is closed by a cover (54), the cover being secured to the door module assembly when in the open position.

15. A door module assembly as defined in Claim 14 when dependent upon Claim 4 in which the cover is secured to the latch support portion.

16. A door module assembly as defined in Claim 14 or 15 in which the cover is pivotally secured to the door module assembly.

17. A door module assembly as defined in Claim 16 when dependent upon Claim 15 and Claim 5 in which the pivotal attachment is via a live hinge.

18. A door including a door inner panel, the door inner panel having a mounting aperture which receives a door module assembly according to any preceding claim, in which the door module assembly is sealed against the door.
